(19) Europäisches Patentamt
European Patent Office
Office européen des brevets

(11) Publication number : 0 682 084 A2

(12) **EUROPEAN PATENT APPLICATION**

(21) Application number : 95303127.5

(22) Date of filing : 09.05.95

(51) Int. Cl.[6] : C08L 71/12, C08L 77/00, // (C08L71/12, 77:00, 25:10, C08K3:14)

(30) Priority : 13.05.94 JP 99788/94

(43) Date of publication of application : 15.11.95 Bulletin 95/46

(84) Designated Contracting States : DE FR GB NL

(71) Applicant : SUMITOMO CHEMICAL COMPANY, LIMITED
5-33, Kitahama 4-chome
Chuo-ku
Osaka (JP)

(72) Inventor : Fujii, Takeshi
2848-19, Kubota
Sodegaura-shi, Chiba-ken (JP)
Inventor : Kitadono, Kaoru
9-6-5, Honmachi
Toyonaka-shi, Osaka-fu (JP)

(74) Representative : Woods, Geoffrey Corlett
J.A. KEMP & CO.
14 South Square
Gray's Inn
London WC1R 5LX (GB)

(54) **Thermoplastic resin composition.**

(57) A thermoplastic resin composition which comprises :
(a) 10 to 90 parts by weight of a polyphenylene ether resin, and
(b) 90 to 10 parts by weight of a polyamide resin, and per 100 parts by weight of [(a) + (b)],
(c) 0.01 to 10 parts by weight of a compatibilizer,
(d) 0 to 100 parts by weight of a rubber, and
(e) 40 to 500 parts by weight of at least one filler selected from $\alpha$-alumina having a mean particle diameter of 60 $\mu$m or less and silicone carbide having purity of 95 % or more and a mean particle diameter of 10 $\mu$m or less.

A thermoplastic resin composition having an excellent heat resistance, an excellent mechanical property, an excellent moldability and an excellent impact resistance, and further having an excellent thermal conductivity and an excellent dimensional stability is provided.

EP 0 682 084 A2

## FIELD OF THE INVENTION

The present invention relates to a new thermoplastic resin composition suitable for injection molding and extrusion molding.

More particularly, the present invention relates to a thermoplastic resin composition comprising a polyphenylene ether resin and a polyamide resin having an excellent heat resistance, an excellent mechanical property, an excellent moldability, an excellent impact resistance, an excellent dimensional stability and an excellent thermal diffusion property.

## BACKGROUND OF THE INVENTION

It has been well known to a person skilled in the art that a thermal diffusive resin molded article is obtained by mixing a thermal conductive filler and polyethylene and/or polypropylene to make a mixture, and injection molding or extrusion molding said mixture.

However, a thermal diffusive resin composition comprising polyethylene and/or polypropylene has a problem that it is inferior in thermal stability.

When a polyphenylene ether resin is used as a resin component of said thermal diffusive resin composition, it has a problem that an impact strength decreases largely by adding a filler, because the polyphenylene ether resin is amorphous.

Besides, a sufficient thermal diffusion property has not been obtained by a filler such as glass fiber.

On the other hand, a polyamide resin has a problem that it has a large water absorption property and is inferior in dimensional stability.

## SUMMARY OF THE INVENTION

The purpose of the present invention is to solve the problems above-mentioned and provide a thermoplastic resin composition comprising a polyphenylene ether resin and a polyamide resin having an excellent heat resistance, an excellent mechanical property, an excellent moldability, an excellent impact resistance, an excellent dimensional stability and an excellent thermal diffusion property.

From these circumstances, as the results of the present inventors' intensive researches and investigations, the present inventors have found that a thermoplastic resin composition has an excellent heat resistance, an excellent mechanical property, an excellent moldability, an excellent impact resistance, an excellent dimensional stability and an excellent thermal diffusion property by blending $\alpha$-alumina having a specified mean particle diameter or a specified silicon carbide to a resin composition comprising a polyphenylene ether resin and a polyamide resin, and attained the present invention.

Namely, the present invention relates to a thermoplastic resin composition which comprises :

(a) 10 to 90 parts by weight of a polyphenylene ether resin, and
(b) 90 to 10 parts by weight of a polyamide resin, and per 100 parts by weight of [ (a) + (b) ],
(c) 0.01 to 10 parts by weight of a compatibilizer,
(d) 0 to 100 parts by weight of a rubber, and
(e) 40 to 500 parts by weight of at least one filler selected from $\alpha$-alumina having a mean particle diameter of 60 $\mu$m or less and silicon carbide having purity of 95 % or more and a mean particle diameter of 10 $\mu$m or less.

## DETAILED DESCRIPTION OF THE INVENTION

The present invention is illustrated in detail as follows.

The polyphenylene ether resin (a) used in the present invention is a polymer obtained by oxidative polymerization of one or more phenol compounds represented by the following formula ( wherein $R_1$, $R_2$, $R_3$, $R_4$ and $R_5$ each represent hydrogen, halogen or a group $R_6$ or $OR_6$, wherein $R_6$ represents a hydrocarbon group or a substituted hydrocarbon group, and at least one of $R_1$, $R_2$, $R_3$, $R_4$ and $R_6$ is hydrogen) with oxygen or oxygen-containing gas using oxidative-coupling catalysts.

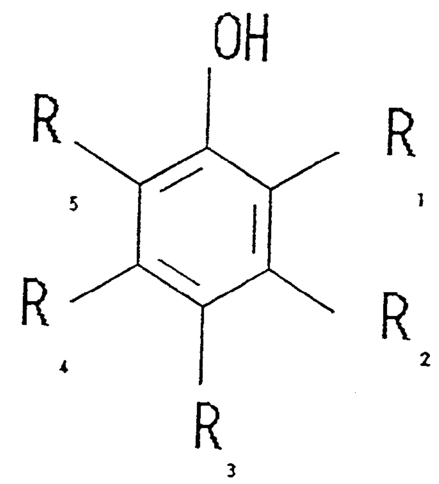

The examples of $R_1$, $R_2$, $R_3$, $R_4$ and $R_5$ in the above-mentioned formula include hydrogen, chlorine, bromine, fluorine, iodine, methyl, ethyl, n-or iso-propyl, pri-, sec- or t-butyl, chloroethyl, hydroxyethyl, phenyl-ethyl, benzyl, hydroxymethyl, carboxyethyl, methoxycarbonylethyl, cyanoethyl, phenyl, chlorophenyl, methylphenyl, dimethylphenyl. ethylphenyl and allyl.

The examples of the above-mentioned formula include phenol, $0^-$, $m^-$ or p-cresol, 2,6-, 2,5-, 2,4- or 3,5-dimethylphenol, 2-methyl-6-phenylphenol, 2,6-diphenylphenol, 2,6-diethylphenol, 2-methyl-6-ethylphenol, 2,3,5-, 2,3,6- or 2,4,6-trimethylphenol, 3-methyl-6-t-butylphenol, thymol and 2-methyl-6-allylphenol.

Furthermore, one or more additional phenol compounds, for example, polyhydroxy aromatic compounds such as bisphenol-A, tetrabromobisphenol-A, resorcin, hydroquinone and novolak resin may be used as raw materials for copolymerization with the phenol compounds illustrated as above-mentioned formula.

Preferable phenols among these compounds are 2,6-dimethylphenol, 2,6-diphenylphenol, 3-methyl-6-t-butylphenol and 2,3,6-trimethylphenol.

Any oxidative coupling catalyst may be employed for oxidative polymerization of the phenol compound, as long as it has polymerization abilities.

These preparing methods of (a) the polyphenylene ether resin are illustrated in, for example, each of the specifications of the United States Patents N0.3306874, N0.3306875 and N0.3257357, Japanese Examined Patent Publication (Koukoku) N0.17880 / 1977 and Japanese Unexamined Patent Publications (Koukai) N0.51197 / 1975 and (Koukai) N0.304119 / 1989.

The examples of (a) the polyphenylene ether resin of the present invention include poly(2,6-dimethyl-1,4-phenylene ether), poly(2,6-diethyl-1,4-phenylene ether), poly(2-methyl-6-ethyl-1,4-phenylene ether), poly(2methyl-6-propyl-1,4-phenylene ether), poly(2,6-dipropyl-1,4-phenylene ether), poly(2-ethyl-6-propyl-1,4-phenylene ether), poly(2,6-butyl-1,4-phenylene ether), poly(2,6-dipropenyl-1,4-phenylene ether), poly(2,6-dilauryl-1,4-phenylene ether), poly(2,6-diphenyl-1,4-phenylene ether), poly(2,6-dimethoxy-1,4-phenylene ether), poly(2,6-diethoxy-1,4-phenylene ether), poly(2-methoxy-6-ethoxy-1,4-phenylene ether), poly(2-ethyl-6-stearyloxy-1,4-phenylene ether), poly(2-methyl-6-phenyl-1,4-phenylene ether), poly(2-methyl-1,4-phenylene ether), poly(2-ethoxy-1,4-phenylene ether), poly(2-chloro-1,4-phenylene ether), poly(3-methyl-6-t-butyl-1,4-phenylene ether), poly(2,6-dichloro-1,4-phenylene ether), poly(2,5-dibromo-1,4-phenylene ether), poly(2,6-dibenzyl-1,4-phenylene ether), and various copolymers comprising plural kinds of repeating unit which constitute these polymers.

The copolymers include copolymers of 2,6-dimethylphenol and multi-substituted phenols such as 2,3,6-trimethylphenol and 2,3,5,6-tetramethylphenol.

Among these polyphenylene ether resins, poly(2,6-dimethyl-1,4-phenylene ether) and copolymer of 2,6-dimethylphenol and 2,3,6-trimethylphenol are preferred.

The range of a molecular weight of the polyphenylene ether resin (a) used in the present invention cannot be specified indiscriminately because its suitable range differs owing to its purpose.

Generally, the molecular weight represented by an intrinsic viscosity measured in chloroform at 30°C is 0.1 to 0.7 dl/g, preferably 0.3 to 0.6 dl/g, more preferably 0.40 to 0.55 dl/g.

Furthermore, (a) the polyphenylene ether resin of the present invention includes a blended or a grafted polymer composition of the above-mentioned polyphenylene ether resin with a styrene polymer.

The styrene polymer includes a polymer comprising, for example, a kind or plural kinds of monomer unit selected from styrene, α-methylstyrene and p-methylstyrene, and for example, polystyrene, a rubber-rein-

forced polystyrene, poly-$\alpha$-methylstyrene, poly-p-methylstyrene and styrene-acrylonitrile copolymer are mentioned.

The blended amount or the grafted amount of the styrene polymer is preferably 500 parts or less by weight per 100 parts by weight of the polyphenylene ether resin (a). If the amount of the styrene polymer exceeds 500 parts by weight, it is not preferred because thermal resistance of the thermoplastic resin composition of the present invention decreases remarkably.

The polyamide resin (b) used in the present invention is one or more polyamide resin or a mixture thereof selected from homopolyamide and copolyamide, which are obtained by polymerization of lactam or amino carboxylic acid, or polycondensation of diamine with carboxylic acid.

The polyamide resin includes, for example, nylon 6, nylon 66, nylon 46, nylon 10, nylon 11, nylon 12, nylon MXD 6 which is a copolymer of methaxylylenediamine and adipic acid, nylon 66/6 copolymer, copolyamide of p-aminomethylbenzoic acid and $\varepsilon$-caprolactam (nylon AHBA/6) and polyamide mainly composed of 2,2,4- / 2,4,4-trimethylhexamethylenediamine · terephthalic acid salt (nylon THDT, THDT/6I).

Blending ratio of (a) the polyphenylene ether resin and (b) the polyamide resin is 90 to 10 parts by weight of the polyamide resin (b) per 10 to 90 parts by weight of the polyphenylene ether resin (a), preferably 80 to 20 parts by weight of the polyamide resin (b) per 20 to 80 parts by weight of the polyphenylene ether resin (a), more preferably 75 to 40 parts by weight of the polyamide resin (b) per 25 to 60 parts by weight of the polyphenylene ether resin (a).

The compatibilizer (c) of the present invention may be compounds used to improve the compatibility between the polyphenylene ether resin (a) and the polyamide resin (b).

The compatibilizer (c) used in the present invention is blended to improve a defect that, as the compatibility between (a) the polyphenylene ether resin and (b) the polyamide resin is originally inferior, particles of (a) the polyphenylene ether resin disperse in (b) the polyamide resin matrix only in particle diameter of about 10 $\mu$m or more even though both components (a) and (b) are melt- kneaded together with, and it shows extremely low mechanical property.

The compatibilizer (c) includes a compound having in a molecule both (i) carbon-carbon double bond or carbon-carbon triple bond and (ii) carboxyl group, acid anhydride group, amino group, acid amide group, imide group, epoxy group, carboxylic acid ester group, isocyanate group, methylol group, a group containing oxazoline ring or hydroxyl group, and at least one kind of these compounds is used.

The detail of these compounds is described in Japanese Examined Patent Publications ( Koukoku ) No.11966 / 1985 and No. 22305 / 1989 and the United States Patent No. 4315086.

For example, maleic acid, maleic anhydride, fumaric acid, unsaturated amine and glycidyl methacrylate are mentioned, and at least one kind of the compatibilizers selected from these compounds is preferred.

The compatibilizer may be used alone or in combination thereof.

Particularly, maleic anhydride is preferred.

The blending amount of (c) the compatibilizer is 0.01 to 10 parts by weight, preferably 0.05 to 8 parts by weight, more preferably 0.1 to 5 parts by weight, per 100 parts by weight of the sum [ (a) + (b) ] of (a) the polyphenylene ether resin and (b) the polyamide resin.

When the blending amount of the compatibilizer (c) exceeds 10 parts by weight, it is not preferred becuase mechanical strength decreases remarkably owing to the decrease of thermal resistance and the decomposition, and when it is less than 0.01 parts by weight, it is not preferred because the compatibility between components (a) and (b) is inferior.

Besides, when the compatibilizer is blended, a radical initiator such as organic peroxide may be used.

The rubber (d) used in the present invention includes natural or synthetic polymer materials which are elastic at room temperature.

As the rubber (d), for example, ethylene-propylene copolymer rubber, ethylene-propylene-non-conjugated diene copolymer rubber, ethylene-butene-1 copolymer rubber, polybutadiene, styrene-butadiene copolymer rubber, styrene-butadiene block copolymer rubber, partially-hydrogenated styrene-butadiene block copolymer rubber, styrene-butadiene-styrene triblock copolymer rubber, partially-hydrogenated styrene-butadiene-styrene triblock copolymer rubber, styrene-isoprene block copolymer rubber, partially-hydrogenated styrene-isoprene block copolymer rubber, styrene-isoprene-styrene triblock copolymer rubber, partially-hydrogenated styrene-isoprene-styrene triblock copolymer rubber, polyurethane rubber. styrene-grafted-ethylene-propylene copolymer rubber, styrene-grafted-ethylene-propylene-non-conjugated diene copolymer rubber, styrene/acrylonitrile-grafted-ethylene-propylene copolymer rubber and styrene/acrylonitrile-grafted-ethylene-propylene-non-conjugated diene copolymer rubber are used.

Furthermore, a modified rubber which is modified by a functional monomer containing an acid group or an epoxy group may be used.

The blending amount of (d) the rubber used in the present invention is 0 to 100 parts by weight, preferably

10 to 50 parts by weight, per 100 parts by weight of the sum [ (a) + (b) ] of (a) the polyphenylene ether resin and (b) the polyamide resin.

The filler (e) used in the present invention is at least one filler selected from α-alumina having the mean particle diameter of 60 μm or less and silicon carbide having purity of 95 % or more and the mean particle diameter of 10 μm or less.

Besides, the mean particle diameter of the filler is a mean particle diameter measured by the shifting method using sieves having specified meshes and Ro-Tap Shaker.

The mean particle diameter was determined as the opening of the mesh corresponding to 50 % by weight of accumulated weights of the filler on each sieve after shaking.

The α-alumina (e) used in the present invention is α-alumina having the mean particle diameter of 60 μm or less, preferably 10 to 60 μm, more preferably 15 to 50 μm.

When the mean particle diameter of α-alumina exceeds 60 μm, mechanical strength of the thermoplastic resin composition decreases and it is not preferred.

Besides, it is preferred that (e) α-alumina used in the present invention is 95 % or more, more preferably 99 % or more in purity from a view point of thermal conductivity.

The α-alumina (e) used in the present invention is prepared by, for example, a mass production process that after alumina part is extracted from bauxite ore by caustic soda, aluminum hydroxide is crystallized from sodium aluminate solution, and furthermore, alumina powder ( α-alumina ) is obtained by baking.

Besides, as α-alumina, electromelting alumina which is obtained by pulverizing said alumina powder after electromelting is suitable.

Furthermore, in order to make handling easy, the pulverized α-alumina whose angles are rounded off is more preferred.

Besides, (e) silicon carbide used in the present invention is 95 % or more in purity and 10 μm or less in the mean particle diameter. Furthermore, (e) silicon carbide is classified as β type of cubic system and α type of hexagonal system according to crystal structure, and α type is preferred.

The filler (e) used in the present invention is not restricted particularly to its shape.

Besides, the filler (e) used in the present invention may be used with or without its surface treatment.

The blending amount of the filler (e) used in the present invention is 40 to 500 parts by weight, preferably 60 to 300 parts by weight, more preferably 70 to 200 parts by weight, per 100 parts by weight of the sum [ (a) + (b) ] of (a) the polyphenylene ether resin and (b) the polyamide resin.

When the filler is less than 40 parts by weight, thermal diffusion property is not adequate, and when it exceeds 500 parts by weight, it is not preferred that moldability decreases and impact resistance becomes inferior.

The thermoplastic resin composition of the present invention is obtained by melt-kneading above-mentioned components (a) to (e) using an extruder. The orders of melt-kneading of these components are not restricted, and any orders may be used.

For example, all components may be melt-kneaded together, or one or more components may be fed in order into an extruder, which has multi feeding-inlets, through each feeding-inlet.

That is, the following methods [1] to [5] may be useful.

[1] a method wherein the components (a) to (e) are added all at once and melt-kneaded together ;

[2] a method wherein the components (a), (c) and (d) are melt-kneaded in advance with or without a radical initiator, and then the components (b) and (e) are additionally added and melt-kneaded;

[3] a method wherein the components (a), (c), (d) and (e) are melt-kneaded in advance with or without a radical initiator, and then the component (b) is additionally added and melt-kneaded;

[4] a method wherein the components (a), (c) and (e) are melt-kneaded in advance, and then the components (b) and (d) are additionally added and melt-kneaded;

[5] a method wherein the components (a) and (c) are melt-kneaded in advance, and then the components (b), (d) and (e) are additionally added and melt-kneaded.

However, it is desired that (a) the polyphenylene ether resin and (c) the compatibilizer are melt-kneaded before (b) the polyamide resin is added.

The temperature and time for melt-kneading in the present invention are not restricted particularly. The temperature is generally 220 to 350 °C.

As an equipment for melt-kneading, for example, an extruder, a Bunbury mixer, a mixing roller and a kneader are mentioned. Besides, a batch operation and a continuous operation may be useful.

In the present invention, additives such as a pigment, an anti-oxidant and a flame retardant may be blended optionally.

A molding process using for the thermoplastic resin composition of the present invention is not restricted particularly, and molding processes applied to conventional thermoplastic resins, for example, injection molding, extrusion molding, blow molding and sheet molding can be applied.

## EXAMPLE

The present invention is described in detail by the following Examples. However, these are only exemplary and the present invention is not restricted by these Examples.

Besides, evaluation methods used in Examples and Comparative Examples are illustrated as follows.

(1) Thermal conductivity

It was measured by the measurement apparatus of thermal conductivity TC-31 manufactured by Kyoto Electronics Industry Ltd.

(2) Dimensional stability

It was shown as an elongation rate (%) of the length ($l_1$) of a test piece, which was obtained by injection molding by using the mold having 12.7×127 (length)×3.2 mm of dimension, measured when moisture absorption reached equilibrium after being left at 23 °C under an atmosphere of 50 % RH, against the length ($l_2$) of the test piece measured directly after injection molding.

Namely, the Dimensional stability was expressed by the following formula;

$$\text{Dimensional stability} = 100(l_1 - l_2)/l_2\ (\%)$$

Besides, the α-alumina used in Examples and Comparative Examples are WHITE ABRAX WA# 700 manufactured by Nippon Abrasives Industry Ltd., and A-25 manufactured by Sumitomo Chemical Company Ltd., and their properties are shown in Table 1.

Table 1

| Grade name of α-alumina | WA# 700 | A-25 |
|---|---|---|
| Purity of alumina(%) | 99.9 | 99.6 |
| Mean particle diameter (μm) | 17 | 45 |
| Remarks | Electromelting α-alumina | Standard particle · rough particle α-alumina |

Example 1

The thermoplastic resin composition was obtained by melt-kneading 20 parts by weight of poly(2,6-dimethyl-1,4-phenylene ether) ( manufactured by Nippon Polyether Ltd. ) having the intrinsic viscosity of 0.46 dl/g measured in chloroform solution at a concentration of 0.5 g/dl at 30°C, and 0.2 parts by weight of maleic anhydride as the compatibilizer thrown by using a loss-in-weight feeder from the first hopper of a continuous twin-screw kneader, whose cylinder temperature was at 260°C and screw revolution numbers was 330 rpm, and 30 parts by weight of the polyamide resin, i.e., nylon 66 ( Ube Nylon 2015B ) and 50 parts by weight of α-alumina (WA# 700) thrown by using a loss-in-weight feeder from the second hopper equipped between the first hopper and the vent hole.

Test pieces were prepared by injection molding of thus obtained thermoplastic resin composition, and thermal conductivity and dimensional stability were measured. These evaluated results are shown in Table 2.

Example 2

The thermoplastic resin composition was melt-kneaded and molded by the same manner as in Example 1 except that α-alumina was substituted A-25 for WA # 700 used in Example 1, and physical properties were evaluated. These evaluated results are shown in Table 2.

Comparative Example 1

The composition was melt-kneaded and molded by the same manner as in Example 1 except that α-alumina in Example 1 was replaced by 40 parts by weight of short glass fiber and 10 parts by weight of calcium carbonate, and physical properties were evaluated. These evaluated results are shown in Table 2.

Comparative Example 2

The composition was melt-kneaded and molded by the same manner as in Example 1 except that no α-alumina was added, and physical properties were evaluated. These evaluated results are shown in Table 2.

Comparative Example 3

The 50 parts by weight of the polyamide resin ( Ube Nylon 2015 B ) was fed from the first hopper and 50 parts by weight of α-alumina (WA# 700) was fed from the second hopper by using the loss-in-weight feeder into the same kneader as in Example 1, and melt-kneaded and molded by the same manner as in Example 1, and physical properties were evaluated. These evaluated results are shown in Table 2.

The thermoplastic resin composition having thermal conductivity of 0.35 W/mK or more and dimensional stability of 0.25 % or less is preferred, and 0.38 W/mK or more and 0.22 % or less is more preferred, as shown in Examples 1 and 2.

Table 2

| | Thermal conductivity ( W / mK ) | Dimensional stability ( % ) |
|---|---|---|
| Example 1 | 0.41 | 0.2 |
| Example 2 | 0.40 | 0.2 |
| Comparative Example 1 | 0.33 | 0.1 |
| Comparative Example 2 | 0.25 | 0.3 |
| Comparative Example 3 | 0.39 | 0.5 |

EFFECT OF THE INVENTION

As described above in detail, the present invention can provide the thermoplastic resin composition having an excellent thermal conductivity and an excellent dimensional stability in adition to the characteristics of an excellent heat resistance, an excellent mechanical property, an excellent moldability and an excellent impact resistance, which a resin composition comprising a polyphenylene ether resin and a polyamide resin originally has.

## Claims

**1.** A thermoplastic resin composition which comprises:
(a) 10 to 90 parts by weight of a polyphenylene ether resin, and
(b) 90 to 10 parts by weight of a polyamide resin, and, per 100 parts by weight of the total amount of (a) and (b),
(c) 0.01 to 10 parts by weight of a compatibilizer,
(d) 0 to 100 parts by weight of a rubber, and
(e) 40 to 500 parts by weight of at least one filler selected from α-alumina having a mean particle diameter of 60 μm or less and silicon carbide having a purity of 95% or more and a mean particle diameter of 10 μm or less.

2. A thermoplastic resin composition according to claim 1, wherein the polyphenylene ether resin (a) has an intrinsic viscosity measured in chloroform at 30°C of 0.40 to 0.55 dl/g.

3. A thermoplastic resin composition according to claim 1 or 2, wherein the compatibilizer (c) is a compound having in a molecule both (i) a carbon-carbon double bond or carbon-carbon triple bond and (ii) a carboxyl, acid anhydride, amino, acid amide, imide, epoxy, carboxylic acid ester, isocyanate or methylol group, a group containing an oxazoline ring or a hydroxyl group.

4. A thermoplastic resin composition according to any one of the preceding claims, wherein the compatibilizer (c) is at least one compatibilizer selected from maleic acid, maleic anhydride, fumaric acid, unsaturated amine and glycidyl methacrylate.

5. A thermoplastic resin composition according to any one of the preceding claims, wherein the rubber (d) is styrene-butadiene copolymer rubber, styrene-butadiene block copolymer rubber, partially-hydrogenated styrene-butadiene block copolymer rubber, styrene-butadiene-styrene triblock copolymer rubber, partially-hydrogenated styrene-butadiene-styrene triblock copolymer rubber, styrene-isoprene block copolymer rubber, partially-hydrogenated styrene-isoprene block copolymer rubber, styrene-isoprene-styrene triblock copolymer rubber, partially-hydrogenated styrene-isoprene-styrene triblock copolymer rubber, styrene-grafted-ethylene-propylene copolymer rubber or styrene-grafted-ethylene-propylene-non-conjugated diene copolymer rubber.

6. A thermoplastic resin composition according to any one of the preceding claims, wherein the α-alumina (e) has a purity of 95% or more.

7. A thermoplastic resin composition according to any one of the preceding claims, wherein the α-alumina (e) has a purity of 99% or more.

8. A thermoplastic resin composition according to any one of the preceding claims, wherein the α-alumina (e) has a mean particle diameter of 10 to 60 μm.

9. A thermoplastic resin composition according to any one of the preceding claims, wherein the α-alumina (e) has a mean particle diameter of 15 to 50 μm.

10. A thermoplastic resin composition according to any one of the preceding claims, wherein the α-alumina (e) is an electromelting alumina.

11. A thermoplastic resin composition according to any one of claims 1 to 5, wherein the silicon carbide (e) has a crystal structure of the α type of hexagonal system.

12. A thermoplastic resin composition according to any one of the preceding claims, wherein the amount of the filler (e) is 70 to 200 parts by weight per 100 parts by weight of the total amount of (a) and (b).

13. A thermoplastic resin composition according to any one of the preceding claims in shaped form.